(19) Europäisches Patentamt / European Patent Office / Office européen des brevets

(11) **EP 4 576 081 A1**

## (12) EUROPEAN PATENT APPLICATION

(43) Date of publication:
**25.06.2025 Bulletin 2025/26**

(21) Application number: **24155916.0**

(22) Date of filing: **06.02.2024**

(51) International Patent Classification (IPC):
**G10L 21/10** (2013.01)     **G06T 13/20** (2011.01)
**G06T 13/40** (2011.01)

(52) Cooperative Patent Classification (CPC):
**G10L 21/10; G06T 13/205; G06T 13/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 IN 202341087758**

(71) Applicant: **Koninklijke Philips N.V.
5656 AG Eindhoven (NL)**

(72) Inventors:
• **HARMA, Aki Sakari**
  **5656 AG Eindhoven (NL)**
• **OUWELTJES, Okke**
  **5656 AG Eindhoven (NL)**
• **NALLANTHIGHAL, Venkata Srikanth**
  **5656 AG Eindhoven (NL)**
• **GROSSEKATHOEFER, Ulf**
  **5656 AG Eindhoven (NL)**

(74) Representative: **Philips Intellectual Property &
Standards
High Tech Campus 52
5656 AG Eindhoven (NL)**

## (54) REALISTIC AVATAR RENDERING

(57) Proposed concepts thus aim to provide schemes, solutions, concepts, designs, methods and systems pertaining to rending an avatar of a user. In particular, an audio signal of the user speaking is processed, with a respiratory prediction model, to predict a respiratory signal describing/indicative of breathing movement of the user whilst speaking. Using the predicted respiratory signal, a time-varying visualization of an avatar of the user speaking is adjusted. As a result, a realistic visualization of an avatar that reflects breathing movement of the user may be rendered without the need for complex sensors tracking movement of the user.

FIG. 5

EP 4 576 081 A1

**Description**

FIELD OF THE INVENTION

The present invention relates to the field of rendering an avatar of a user, and in particular to rendering a speaking avatar of the user.

BACKGROUND OF THE INVENTION

Immersive, interactive augmented reality (AR), mixed reality (MR) and virtual reality (VR) are increasingly used to enable people to communicate and collaborate with one another in innovative ways, whether for gaming or business. In extended reality (i.e. AR, MR and VR) users are often represented by avatar characters. Such avatars typically reflect the movement, gestures, and facial expression of the respective user. Furthermore, avatars may be altered so as to change the appearance of the user. Avatars ultimately provide a useful mode for sharing complex ideas and gestures in a manner familiar to an observer.

Accurately representing the real-life body movement of the user in avatar form is an area of particular concern. Indeed, it has been noticed that visualization of body movement of an avatar often does not match with body movements of the respective talking user. Avatars typically do not appear breathing during speech. While avatar body animation technology has progressed significantly in recent times, movement of the avatar body due to respiration is usually unrealistic.

In high-budget scenarios (such as rendering for movies), realistic body movement of an avatar is achieved by motion capture sensors worn by talking actors. However, these sensors are not accessible or convenient for the average user, and may require significant computational resources to process. Therefore, it is common practice to add idle motion animation to create an illusion of realistic avatar body movement. However, this movement is simply provided in a looped motion pattern. Of course, this may be noticed by a viewer after a short period of time.

Thus, there is a need for rendering an avatar of a user which reflects the body movement of the user during speech in a realistic manner.

SUMMARY OF THE INVENTION

The invention is defined by the claims.

According to examples in accordance with an aspect of the invention, there is provided a method for rendering of an avatar of a user. The method comprises:

  processing, with a respiratory prediction model, an audio signal of the user speaking to predict a respiratory signal describing breathing movement of the user whilst speaking; and
  adjusting a time-varying visualization of an avatar of the user speaking based on the respiratory signal.

Proposed concepts thus aim to provide schemes, solutions, concepts, designs, methods and systems pertaining to rending an avatar of a user. In particular, an audio signal of the user speaking is processed, with a respiratory prediction model, to predict a respiratory signal describing/indicative of breathing movement of the user whilst speaking. Using the predicted respiratory signal, a time-varying visualization of an avatar of the user speaking is adjusted. As a result, a realistic visualization of an avatar that reflects breathing movement of the user may be rendered without the need for complex sensors tracking movement of the user.

By way of explanation, as a person speaks, the typically regular rhythm of movement due to breathing is interrupted. Therefore, an avatar visualized as having regular interval breathing whilst speaking appears unnatural upon inspection. Moreover, directly sensing the breathing movement of the user (for the purpose of transposing such movement onto the visualized avatar) can prove to be computationally expensive, and require large amounts of dedicated sensors. Accordingly, there exists a need for an alternative way to visualize an avatar of a user speaking.

Embodiments of the invention are thus based on the realization that audio of the user speaking can be leveraged in order to ascertain movement of the subject due to respiration/breathing. That is, the respiratory movement of the user whilst speaking can be determined from audio of speech of the user. Once the respiratory signal is predicted/determined/ascertained from the audio signal, the usual time-varying visualization of the avatar may be modified to appear to be breathing in a manner natural of the user speaking.

In other words, the visualization of the avatar of the user can be altered based on audio of the user speaking. Thus, when the speaking avatar is presented to an observer, movement of the speaking avatar will appear more natural to the observer (by virtue of the predicted respiratory signal describing breathing movement of the user). This is enabled by the fact that a respiratory prediction model can extract features from the audio signal in order to predict the respiratory signal.

Accordingly, the need for sensors directly measuring movement (e.g., cameras, motion sensors, etc.) to render an avatar with realistic breathing movement is obviated.

In a specific implementation, adjusting the visualization of the avatar may comprise determining a time-varying data series of body parameter values describing a change to the avatar over time, based on the respiratory signal; and adjusting the time-varying visualization of the avatar based on the data series of body parameter values.

In this way, the respiratory signal describing breathing movement of the user whilst speaking may be translated into movement of one or more parts the avatar. For example, if the respiratory signal indicates that the user is inhaling, then this may translate into the chest circumference/volume of the avatar increasing, and/or the abdomen circumference/-volume of the avatar decreasing.

In particular, the time-varying data series of body parameter values may comprise a time-varying data series of a chest values describing the circumference of a chest of the user whilst speaking. For example, the time-varying data series of chest values may include a sequence of chest volume values.

Alternatively or additionally, the time-varying data series of body parameter values may comprise a time-varying data series of abdomen values describing the circumference of an abdomen of the user whilst speaking. For example, the time-varying data series of abdomen values may include a sequence of abdomen volume values.

In some embodiments, the respiratory prediction model may be a machine learning model configured to receive an audio signal of a user speaking, and output a respiratory signal describing breathing movement of the user whilst speaking.

This may improve an accuracy of the resultant predicted respiratory signal. For example, by implementing the respiratory prediction model as a machine learning model (i.e., artificial intelligence or neural network based model), the method may work for untrained audio/speech patterns.

In particular, the respiratory prediction model may be trained by a training algorithm using a training algorithm configured to receive an array of training inputs and respective known outputs, wherein a training input comprises an audio signal of a user speaking, and wherein a respective known output comprises a respiratory signal describing a known breathing movement of the user whilst speaking.

This training data may be readily obtained from existing systems that capture body movement during speech (e.g., for 3D movie rendering, etc.). With larger volumes of training data, the more accurate the respiratory prediction model may become.

In some embodiments, the method further comprises adjusting the respiratory signal based on metadata associated with the audio signal. The metadata may comprise at least one of contextual data describing a surrounding environment of the speaking user and/or a condition of the speaking user, or physiological data describing a physiological characteristic of the user.

Metadata may provide important information for adjusting the predicted respiratory signal, such that a more accurate respiratory signal is obtained. This may be important for improving realism of the resultant visualized avatar.

In some embodiments, the method may further comprise a preceding step of adjusting the audio signal based on one or more speech distortion values describing changes to one of a pitch, tone, accent, intonation, and inflection of the speech of the user.

Speech distortion may be applied to suit user preferences, and/or to ensure anonymity and privacy of the user. By applying the distortion to the audio signal before predicting a respiratory signal, the resultant visualization of the avatar may seem more realistic, and observers may not even be aware that a distortion has been applied.

The method may also comprise a step of adjusting the respiratory signal based on avatar character data describing at least one characteristic of the avatar of the user.

This may adjust the avatar to suit preferences of the user or otherwise, whilst still ensuring realistic movement of the avatar. By way of example, the avatar may be a non-human character, and the visual rendering may be performed based on a model of the respiratory activity of the character (i.e., respiratory physiology may differ between different characters and so require different types of movement). Alternatively, the avatar may be an older character, and therefore have more exaggerated breathing movement.

Furthermore, the method may further comprise steps of generating a set of avatar movements describing postures and/or gestures of the avatar based on the audio signal and the respiratory signal; and adjusting the time-varying visualization of the avatar of the user speaking based on the set of avatar movements.

This may further improve the realism of visualization of the avatar. Indeed, frequency and type of breathing (as indicated by the respiratory signal) may indicate a type of gesture performed by and posture of the user. Further, with increased frequency of breathing an intensity and frequency of gestures may increase. Accordingly, the avatar may be visualized in such a way to perform varying postures and/or gestures based on the respiratory signal. In addition, the audio signal itself may be used to provide further contextual clues as to appropriate gestures and/or postures.

The method may comprise displaying the time-varying visualization of the avatar while simultaneously outputting the audio signal.

As a final step, the time-varying visualization of the avatar may be displayed/outputted, whilst the audio signal (of the user speaking) is played. This will provide the illusion of the avatar being the source of the speech, with the movement being more realistic due to the adjustments made based on the respiratory signal.

In addition, the method may comprise adjusting the time-varying visualization of the avatar based on a target respiratory characteristic describing a target breathing movement of the user.

In other words, the time-varying visualization of the avatar may be altered to reflect closer to a target breathing movement of the user. This may be particularly advantageous for coaching breathing patterns during speech. Simulating the chest movement of the avatar according to the speech would give the user with a breathing pattern deviating from an ideal breathing pattern, better intuition to mimic the breathing moments correctly, which would aid in speaking better. This may be useful, for example, when helping a user to relax. The target respiratory characteristic may have parameters slightly deviating from the predicted respiratory signal, so as to encourage the user (observing the avatar) to alter their breathing by mimicry.

The respiratory signal may comprise a virtual respiratory belt signal.

By way of explanation, a respiratory belt measures a dimension of a user (e.g., a waist, chest, abdomen circumference) over time. In practice, a respiratory belt is used to track movement of a user. This can be useful for rendering realistic avatars of the user. However, this requires the physical respiratory belt. In contrast, this embodiment of the invention proposes to generate a virtual respiratory signal from the audio signal, which may then be input to the same or similar algorithms for adjusting the time-varying representation of the avatar that are used in conjunction with the real respiratory belt.

According to further aspects of the invention, there is provided a computer program comprising computer program code means adapted, when said computer program is run on a computer, to implement a method for rendering of an avatar of a user.

According to yet another aspect of the invention, there is provided a system for rendering of an avatar of a user, the system comprising a processor configured to:

process, with a respiratory prediction model, an audio signal of the user speaking to predict a respiratory signal describing breathing movement of the user whilst speaking; and
adjust a time-varying visualization of an avatar of the user speaking based on the respiratory signal.
These and other aspects of the invention will be apparent from and elucidated with reference to the embodiments described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 presents a flow diagram of a method for rendering of an avatar of a user according to an embodiment;
Fig. 2 presents a simplified representation of the training of a respiratory prediction model according to an aspect of the invention;
Fig. 3 presents an example of a speech signal and a corresponding respiratory belt signal;
Fig. 4 presents a simplified block diagram of a system for rendering of an avatar of a user according to another embodiment; and
Fig. 5 is a simplified block diagram of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims.

It should be understood that the Figures are merely schematic and are not drawn to scale. It should also be understood that the same reference numerals are used throughout the Figures to indicate the same or similar parts.

The invention proposes concepts rendering an avatar of a user. In particular, an audio signal of the user speaking is processed, with a respiratory prediction model, to predict a respiratory signal describing/indicative of breathing movement of the user whilst speaking. Using the predicted respiratory signal, a time-varying visualization of an avatar of the user speaking is adjusted. As a result, a realistic visualization of an avatar that reflects breathing movement of the user may be rendered without the need for complex sensors tracking movement of the user.

By way of background explanation, in gaming and in the metaverse users may use avatar characters to represent themself in the AR/VR/MR scene. Via avatars, the users can talk to each other and other virtual persons in the scene. The speech from the user may also be modified before being output to other users, for example to match the physical form of the avatar or to change the language to be able to communicate across a language barrier.

Recently, measured physiological data of a user (e.g., from a wearable biosensor) has been used to control the visualization and behaviour of an avatar. This may give rise to realistic avatar movements as the exact movements of the user are mapped to the avatar. However, such sensing equipment is not widely accessible. As a result, it has been observed that the visualization of the body movements of an avatar often do not accurately match with real human body movements of a talking person. In particular, avatars often do not appear breathing during speech. It is common to add idle motion animation to create a life like illusion of avatar. However, this movement is typically a looped motion pattern not related to actual speech content of the user.

In other words, there is a need for synthesizing the realistic body movement during speech to make applications in metaverse and in gaming worlds more realistic. However, in many applications, sensor data capturing movement of the user during speech is not available.

Disclosed embodiments of the invention are thus based on a realization that a trained model (e.g., a deep learning model) may estimate a respiratory signal describing breathing movement of the (e.g., chest and abdomen) user during speech, from an audio signal of the speech. That is, disclosed embodiments perform analysis on incoming speech of the user, and control the visualization of an avatar accordingly.

More particularly, speech contained in an audio signal contains information/features describing or indicative of the respiratory behaviour of the speaker. Intakes and exhales themselves may be distinguishable from speech in the audio signal. Additionally, the speech may have pauses or other natural break points for respiration.

Accordingly, the invention provides a respiratory prediction model that takes an audio signal of speech of the user, and outputs a respiratory signal containing time-series information corresponding to the body movements of the user during speech. An avatar body description model is then altered using the respiratory signal, such that a physical appearance of the avatar is altered. For example, the respiratory signal may be mapped to movement information used to control body parameters of the avatar. Finally, the avatar may be visualized based on the body parameters whilst the audio signal is played back.

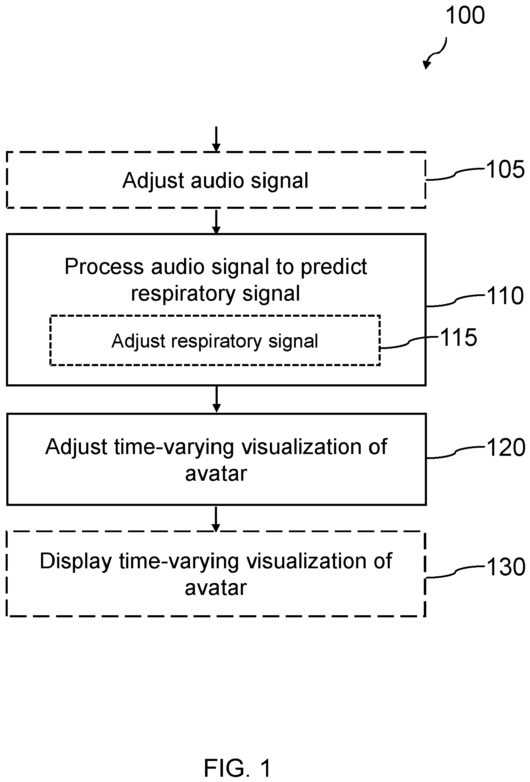

Fig. 1 presents a flow diagram of a method for rendering of an avatar of a user according to an embodiment. Specifically, the method provides for the adjustment of the time-varying rendering of the avatar representing the user based on an audio signal of the user speaking. That is, the method provides for realistic movements of a body of an avatar by use of speech in an audio signal without requiring other sensors/signals.

The audio signal may be any sound recording that includes the user speaking (e.g., a voice note of the user, or sound taken from a video recording). The audio signal may also contain additional sound-based information such as background noise or speech from other users, and therefore may require pre-processing to extract the speech of the user. The audio signal may be received in real-time, or may be obtained from a memory storage.

In (optional) initial step 105, the audio signal is adjusted based on one or more speech distortion values describing changes to one of a pitch, tone, accent, intonation, and inflection of the speech of the user. In essence, the audio signal may be changed such that the voice of the user is altered. For example, the user may be made to sound completely different. This may be advantageous for privacy, or may simply be a user preference.

In step 110, the audio signal is processed, with a respiratory prediction model, to predict a respiratory signal describing breathing movement of the user whilst speaking (speaking corresponding to the speech within the audio signal).

In general, the respiratory signal is any signal from which breathing movement of the user during speech of the audio signal may be derived. For example, the respiratory signal may simply contain data values indicating a respiration state at each point in time (e.g., inhaling, exhaling, neutral), or may also include a magnitude of said respiration state.

In other examples, the respiratory signal may be a direct measure of the breathing movement of the user, such as a chest and/or abdomen circumference, gait, posture, or any other bodily parameter that changes as the user breathes.

The respiratory prediction model may be a machine learning (i.e. AI or neural network) model configured to receive an audio signal of a user speaking, and output a respiratory signal describing breathing movement of the user whilst speaking. Accordingly, the respiratory prediction model is trained by a training algorithm using a training algorithm configured to receive an array of training inputs and respective known outputs, wherein a training input comprises an audio signal of a user speaking, and wherein a respective known output comprises a respiratory signal describing a known breathing movement of the user whilst speaking.

Of course, the respiratory prediction model may be any other model capable of converting speech of a user into a respiration signal indicating breath-related movement of the user whilst speaking. These would be readily apparent and identifiable to those skilled in the art.

In (optional) step 115, the respiratory signal is adjusted/altered/modified. The adjustment may be based on a variety of factors and user preferences.

Specifically, the respiratory signal may be adjusted based on metadata associated with the audio signal and/or associated with the user. This may be used to account for a variety of factors. Metadata may comprise contextual data describing a surrounding environment of the speaking user and/or a condition of the speaking user. Thus, this may ensure that the predicted respiratory signal fits/matches the context in which the audio was recorded. Metadata may also comprise physiological data describing a physiological characteristic of the user. This may properly ensure that the predicted respiratory signal fits/matches the user.

Alternatively, or additionally, the respiratory signal may be adjusted so as to describe movement of the user in a natural way (e.g., by reducing the potential occurrences of judder, etc.)

Alternatively, or additionally, the respiratory signal may be adjusted based on avatar character data describing at least one characteristic of the avatar of the user. That is, the predicted respiratory signal may be adjusted so that it no longer directly correlates to breathing movement of the user, but is adjusted as if the user were a different person (e.g., may be translated to a respiratory signal akin to someone with a different age, height, gender, etc.).

In step 120, a time-varying visualization of an avatar of the user speaking is adjusted based on the respiratory signal.

The time-varying visualization of the avatar may be any visual representation of the user that changes with time. This may be represented in 2D or in 3D. The time-varying visualization may not be visualized/displayed in real time, but instead refer to data that can be used to subsequently present an avatar.

For example, the time-varying visualization of the avatar may be a cartoonized version of the user, which mirrors body and face movements of the user. Such an avatar may be represented for the purposes of gaming, remote meetings, medical consultations, or otherwise conveying information.

Accordingly, the time-varying visualization of the avatar may have body, facial or other visual parameters that change with time. The respiratory signal is further used to change the parameters of the avatar with time to reflect the breathing movement of the speaking user. That is, the respiratory signal is mapped onto the avatar so that the avatar appears to be breathing in a realistic manner.

In specific embodiments, a time-varying data series of body parameter values is determined based on the respiratory signal. The time-varying data series of body parameter values describe a change to the avatar over time. The time-varying visualization of the avatar is then adapted based on the data series of body parameter values.

That is, the respiratory signal is mapped to one or more body parameters. This mapping can be used in a straightforward manner to adjust the corresponding parameter of the avatar.

In particular, the time-varying data series of body parameter values may comprise a time-varying data series of a chest values describing the circumference/volume of a chest of the user whilst speaking. Alternatively, or in addition, the time-varying data series of body parameter values may comprise a time-varying data series of abdomen values describing the circumference/volume of an abdomen of the user whilst speaking. Of course, other body parameter values may be chosen.

Step 120 may also include adjusting the time-varying visualization of the avatar based on a target respiratory characteristic describing a target breathing movement of the user. That is, the time-varying visualization of the avatar may be modified so that it does not directly represent breathing movement of the user, but may vary slightly. For example, the visualized breathing movement may have a different frequency or magnitude. In some scenarios this may be useful for coaching a user to encourage a change in breathing pattern by mimicry.

In addition, a set of avatar movements describing postures and/or gestures of the avatar may be generated based on the audio signal and the respiratory signal. Such postures/gestures may be derived from the content or tone of the speech in the audio signal, as well as features of the respiratory signal. The time-varying visualization of the avatar of the user speaking may then be adjusted based on the set of avatar movements.

Simply put, the respiratory signal (contextualised by the audio signal) may be used to determine a set of typical movements of the user during the speech. These can be mapped onto the avatar to make the avatar appear more lifelike during the speech, without the need to track the specific posture/gestures of the user using dedicated sensors or other inputs.

In (optional) step 130, the time-varying visualization of the avatar is displayed while simultaneously outputting the audio signal. This may be performed in real time, with the user speaking, and avatar adjustment and display occurring substantially simultaneously.

Alternatively, the time-varying visualization of the avatar may be stored for playback in the future. That is, the time-varying visualization of the avatar may not be played in real-time as the user speaks.

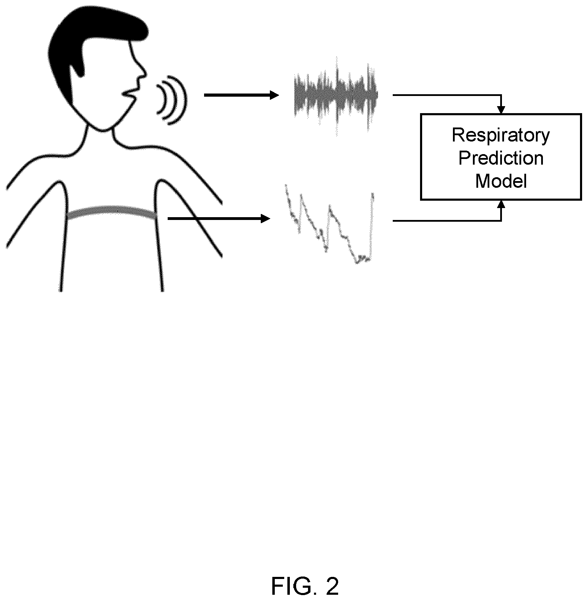

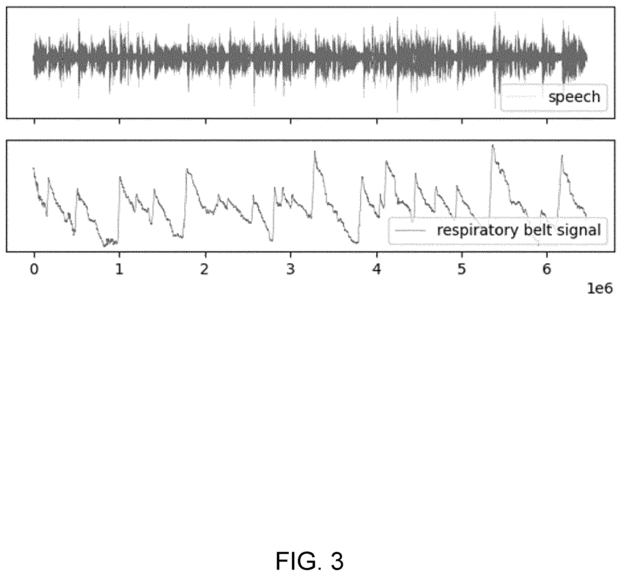

Fig. 2 presents a simplified representation of the training of a respiratory prediction model according to an aspect of the invention. Fig. 3 presents an example of a speech signal and a corresponding virtual respiratory belt signal.

In an exemplary embodiment of the invention, the respiratory prediction model is a machine learning model that can predict a virtual respiratory belt sensor signal from speech of a user. Training data is acquired, as represented in Fig. 2 by recording speech of the user wearing a respiratory belt sensor. This training data is used to train the respiratory prediction model.

Once the model has been trained, a predicted virtual respiratory belt signal can be computed, as shown in Fig. 3. For a speech input signal x(t) the respiratory prediction model M() produces a virtual respiratory belt signal given by:

$$y(t) = M(x(t)) \qquad [1]$$

The time-varying representation of the avatar may be described by body parameters indicating dimensions of the body of the avatar. In one embodiment, the avatar is characterized by parameters related to the circumference of the chest and abdomen of the character, denoted by $o_c$ and $o_a$, respectively.

The body parameters may be controlled based on a normalized virtual respiratory belt signal, where t is a time index corresponding to the time in the speech signal, i.e., a zero-mean signal with variance of 1.0. The time-varying chest and abdomen control signals may be formed according to the following:

$$o_c(t) = O_c + g_c y(t) \qquad [2]$$

$$o_a(t) = O_a + g_a y(t) \qquad [3]$$

Where the coefficients $g_c$ and $g_a$ are typically selected to match natural movements. For example, the value of $g_c$ is approximately 10% of $O_c$ and the control signal for the abdomen typically smaller, e.g., $g_a = g_c/2$.

During rendering of the avatar speaking, the audio signal is played back, and the visualization of the avatar is controlled at the same rate using the time-varying control parameters $o_c(t)$ and $o_a(t)$.

In additional embodiments, there may be different controls of the body parameters corresponding to the speech movements. For example, in a physically realistic simulation with the organ lungs inside the 3d body model the control by $y(t)$ may be applied to the volume of the lungs. The control may also be applied to a parameter corresponding to the length of the trunk of the avatar.

The speech may be modified, for example, to match the character or to conceal the identity of the user. In this case, the virtual respiratory belt signal is estimated from the modified speech signal, where the virtual respiratory belt signal may be specific for the target character. In this and other embodiments the respiratory prediction model may be customized based on a metadata associated with the speech signal.

In some embodiments where the avatar is not a human character, the visual rendering may be performed based on a model of the respiratory activity of the character. For example, the gas exchange in avian (air sacs) and fish (gill) respiratory physiology requires different types of movement than mammalian respiration.

In another embodiments, posture and gestures of the avatar are also controlled based on the virtual respiratory belt signal. For example, during an intense conversation the frequency of the virtual respiratory belt signal will increase, and the number of gestures or the type of gesture made by the hands can be adapted accordingly.

An application of the invention could be in virtual therapeutics agents with avatars used for coaching people with speech disorders such as aphasia from a stroke, stutter, or pronunciation difficulties. Simulating the chest movement of the avatar according to the speech would give the user with speech disorder better intuition to mimic the breathing moments correctly which would aid in speaking better.

Similarly, breathing movements in an avatar could be used in a closed-loop system to help users relax or coach people. In such a scenario, the virtual breathing movements would be estimated from the user's behaviour, but slightly changed to reach a given target, e.g., relaxation.

In an additional embodiment the speech analysis may also predict articulatory movements of the talker and the emotional state of the talker based on the speech content and voice characteristics and uses those to control the detailed facial animation of the jaw and lips.

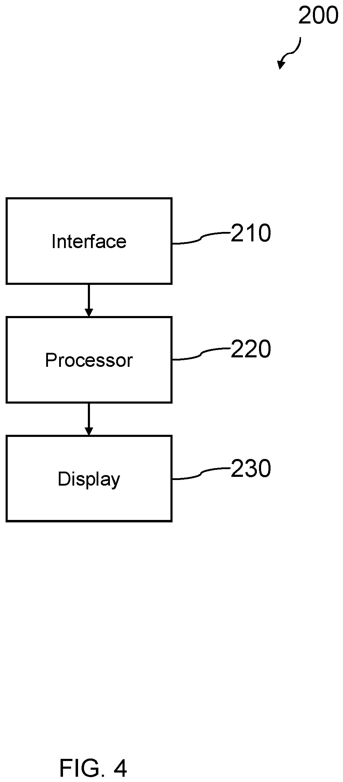

Fig. 4 presents a simplified block diagram of a system 200 for rendering of an avatar of a user according to another embodiment. The system may comprise an interface 210, processor 220, and display 230.

The interface 210 may be configured to receive an audio signal of the user speaking. This may be received directly from storage, or obtained from memory. The interface 210 may further be configured to obtain an avatar model from which a time-varying visualization of an avatar, or simply obtain the time-varying visualization of an avatar itself.

The processor 220 is configured to predict a respiratory signal describing breathing movement of the user whilst speaking. This is achieved by processing, with a respiratory prediction model, the audio signal of the user speaking. This may be achieved used any of the methods described according to step 110 of Fig. 1.

In some embodiments, the processor 220 may also be configured to pre-process the audio signal. For example, the pre-processing may be to remove noise, or may be to adjust the audio signal to suit user preferences.

The processor 220 is further configured to adjust the time-varying visualization of an avatar of the user speaking based on the respiratory signal. This may be achieved used any of the methods described according to step 120 of Fig. 1.

The display 230 is configured to output the time-varying visualization of an avatar, which may be performed whilst simultaneously outputting the audio signal (or at least the speech of the user in the audio signal).

Accordingly, the system 200 provides a rendering of an avatar with realistic breathing movements of the body based on only an audio signal containing speech of a user.

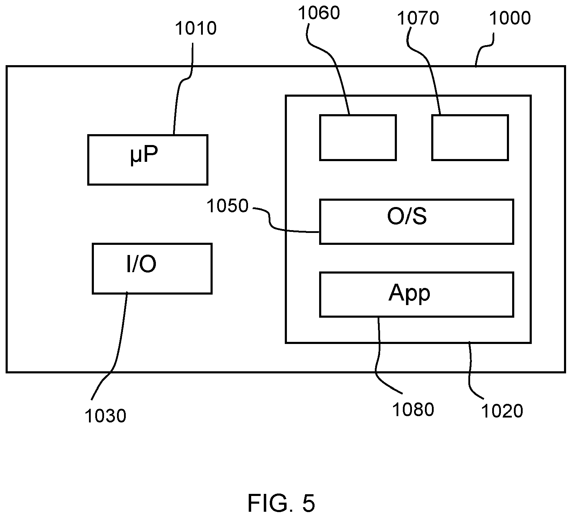

Fig. 5 illustrates an example of a computer 1000 within which one or more parts of an embodiment may be employed. Various operations discussed above may utilize the capabilities of the computer 1000. For example, one or more parts of a system for generating virtual model renderings in extended reality for viewing by participants of a meeting may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, ALGOL, Pascal, BASIC, API calls, HTML, XHTML, XML, ASP scripts, JavaScript, FORTRAN, COBOL, Perl, Java, ADA, .NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods described in relation to Fig. 1, and the systems described in relation to Fig. 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagram Fig. 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1. A method (100) for rendering of an avatar of a user, the method comprising:

    processing (110), with a respiratory prediction model, an audio signal of the user speaking to predict a respiratory signal describing breathing movement of the user whilst speaking; and
    adjusting (120) a time-varying visualization of an avatar of the user speaking based on the respiratory signal.

2. The method of claim 1, wherein adjusting (120) the visualization of the avatar comprises:

    determining a time-varying data series of body parameter values describing a change to the avatar over time based on the respiratory signal; and
    adjusting the time-varying visualization of the avatar based on the data series of body parameter values.

3. The method of claim 2, wherein the time-varying data series of body parameter values comprises at least one of a time-varying data series of a chest values describing the circumference of a chest of the user whilst speaking, and a time-varying data series of abdomen values describing the circumference of an abdomen of the user whilst speaking.

4. The method of any of claims 1-3, wherein the respiratory prediction model is a machine learning model configured to receive an audio signal of a user speaking, and output a respiratory signal describing breathing movement of the user whilst speaking.

5. The method of claim 4, wherein the respiratory prediction model is trained by a training algorithm using a training algorithm configured to receive an array of training inputs and respective known outputs, wherein a training input comprises an audio signal of a user speaking, and wherein a respective known output comprises a respiratory signal describing a known breathing movement of the user whilst speaking.

6. The method of any of claims 1-5, further comprising adjusting (115) the respiratory signal based on metadata associated with the audio signal.

7. The method of claim 6, wherein the metadata comprises at least one of contextual data describing an surrounding environment of the speaking user and/or a condition of the speaking user, or physiological data describing a physiological characteristic of the user.

8. The method of any of claims 1-7, further comprising a preceding step of adjusting (105) the audio signal based on one or more speech distortion values describing changes to one of a pitch, tone, accent, intonation, and inflection of the speech of the user.

9. The method of any of claims 1-8, further comprising a step of adjusting (115) the respiratory signal based on avatar character data describing at least one characteristic of the avatar of the user.

10. The method of any of claims 1-9, further comprising:

    generating a set of avatar movements describing postures and/or gestures of the avatar based on the audio signal and the respiratory signal; and
    adjusting (120) the time-varying visualization of the avatar of the user speaking based on the set of avatar movements.

11. The method of any of claims 1-10, wherein the respiratory signal comprises a virtual respiratory belt signal.

12. The method of any of claims 1-11, further comprising displaying (130) the time-varying visualization of the avatar while simultaneously outputting the audio signal.

13. The method of any of claims 1-12, further comprising adjusting (120) the time-varying visualization of the avatar based on a target respiratory characteristic describing a target breathing movement of the user.

14. A computer program comprising computer program code means adapted, when said computer program is run on a computer, to implement the method of any of claims 1-13.

15. A system (200) for rendering of an avatar of a user, the system comprising a processor (220) configured to:

process, with a respiratory prediction model, an audio signal of the user speaking to predict a respiratory signal describing breathing movement of the user whilst speaking; and
adjust a time-varying visualization of an avatar of the user speaking based on the respiratory signal.

100

| Adjust audio signal | 105 |

Process audio signal to predict respiratory signal — 110

Adjust respiratory signal — 115

Adjust time-varying visualization of avatar — 120

Display time-varying visualization of avatar — 130

FIG. 1

FIG. 2

FIG. 3

200

Interface ⟋210

Processor ⟋220

Display ⟋230

FIG. 4

FIG. 5

Europäisches
Patentamt

European
Patent Office

Office européen
des brevets

## EUROPEAN SEARCH REPORT

**Application Number**

EP 24 15 5916

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/164298 A1 (KHOT ISHAN SANJAY [US] ET AL) 25 May 2023 (2023-05-25) | 1,2, 4-12,14, 15 | INV. G10L21/10 G06T13/20 |
| Y | * figure 16 * <br> * paragraphs [0222], [0225] * | 13 | G06T13/40 |
| | ----- | | |
| X | BERNARDET ULYSSES ET AL: "Speech Breathing in Virtual Humans: An Interactive Model and Empirical Study", 2019 IEEE VIRTUAL HUMANS AND CROWDS FOR IMMERSIVE ENVIRONMENTS (VHCIE), IEEE, 24 March 2019 (2019-03-24), pages 1-9, XP033549719, DOI: 10.1109/VHCIE.2019.8714737 [retrieved on 2019-05-14] | 1-4, 6-12,14, 15 | |
| Y | * figure 3 * <br> * section 2.2 * <br> * section 3.2 * <br> * section 3.3 * | 13 | |
| | ----- | | |
| Y | US 2022/215926 A1 (DENAULT ANNE-MARIE [CA] ET AL) 7 July 2022 (2022-07-07) * paragraphs [0005], [0013], [0016], [0023], [0027], [0074] * | 13 | **TECHNICAL FIELDS SEARCHED (IPC)** G10L G06T |
| | ----- | | |

The present search report has been drawn up for all claims

| Place of search | Date of completion of the search | Examiner |
|---|---|---|
| Munich | 22 May 2024 | Chétry, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 5916

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | Publication date | Patent family member(s) | | Publication date |
|---|---|---|---|---|
| US 2023164298 A1 | 25-05-2023 | NONE | | |
| US 2022215926 A1 | 07-07-2022 | CA | 3138559 A1 | 05-11-2020 |
| | | CN | 113785364 A | 10-12-2021 |
| | | EP | 3963596 A1 | 09-03-2022 |
| | | US | 2022215926 A1 | 07-07-2022 |
| | | WO | 2020220142 A1 | 05-11-2020 |

EPO FORM P0459

For more details about this annex : see Official Journal of the European Patent Office, No. 12/82